# EUROPEAN PATENT SPECIFICATION

(11) **EP 3 466 273 B1**
(45) Date of publication and mention of the grant of the patent: **23.08.2023**
(21) Application number: 17802921.1
(22) Date of filing: 26.05.2017
(51) Int. Cl.: A23L 7/157, A23P 20/12

(54) **PACKAGED MIX FOR FRIED FOOD**
VERPACKTE MISCHUNG FÜR FRITTIERTE NAHRUNGSMITTEL
MÉLANGE POUR FRITURE CONDITIONNÉ DANS UN RÉCIPIENT

(30) Priority: 27.05.2016 JP 2016106259
(43) Date of publication of application: 10.04.2019
(73) Proprietor: Nisshin Seifun Welna Inc., Tokyo 101-8441 (JP)
(72) Inventor: OBARA, Mie, Tokyo 103-8544 (JP); SAKAKIBARA, Michihiro, Tokyo 103-8544 (JP)
(74) Representative: Hartz, Nikolai
(86) International application number: PCT/JP2017/019726
(87) International publication number: WO 2017/204335

(56) References cited:
- WO-A1-2015/118697
- WO-A1-2015/119294
- CA-A1- 2 938 959
- JP-A- H05 168 430
- JP-A- 2004 123 594
- JP-A- 2007 063 217
- JP-A- 2011 125 332
- JP-A- 2012 036 140
- JP-B1- S3 825 251
- HEE-MOON KANG ET AL: "Physical Properties of Wheat Flour Treated by Supercritical Carbon Dioxide", 3RD INTERNATIONAL CONFERENCE ON BIOTECHNOLOGY AND FOOD SCIENCE (ICBFS 2012) ELSEVIER SCIENCE BV, SARA BURGERHARTSTRAAT 25, PO BOX 211, 1000 AE AMSTERDAM, NETHERLANDS SERIES : APCBEE PROCEDIA (ISSN 2212-6708(PRINT)), vol. 2, 1 January 2012 (2012-01-01), pages 27-31, XP055219732, Netherlands ISSN: 2212-6708, DOI: 10.1016/j.apcbee.2012.06.006

## Description

### Technical Field

The present invention relates to a packaged mix for fried food which is shaken out from a container in use.

### Background Art

A powder mixture including wheat flour and other powder, for example, cereal flour other than wheat flour such as rice flour, starch, and powdered flavoring, is packaged and generally commercially available as a premix product, for example, bread mix, cake mix, *okonomiyaki* mix, and mix for fried food such as *tempura* flour. However, wheat flour originally has low fluidity and easily causes lumps so that many kinds of mixed powder need to be sieved after a required amount of the powder is taken out from a bag in each use. It is a cumbersome work to open a bag, take out the required amount of the mixed powder, and reseal the bag by some means during cooking in each time. Furthermore, it may often occur that the required amount of mixed powder cannot be taken out well. For example, many take-out operations are necessary because of an inadequate amount of powder to be taken out, or conversely, too large amount of powder taken out leads to a waste of powder.

Cooking generally requires speediness. For example, a recipe of making *tempura* is to prepare ingredients to be fried at a low temperature and fry them in hot oil. Therefore, it is required to preliminarily cool materials of batter, for example, water, eggs, and tempura flour, in a refrigerator and then quickly prepare those materials into batter. Taking time in weighing the *tempura* flour or sieving the flour to remove lumps increases the temperature of batter, which adversely affects the quality of *tempura.* As described above, an action of taking out mixed powder from a bag or the presence of lumps in the mixed powder obstructs quick operation and puts a burden on cooking.

CA 2 938 959 A1 discloses a container-containing wheat flour that can be used by being swung out from a container. The container is filled with flour having wheat flour having a 10% particle size D 10 of 18 pm or more and a 90% particle diameter D 90 of 500 pm or less, packed in a shaking container having one or more swing holes with a maximum width of 2 to 20 mm. Patent Literatures 1 and 2 disclose that wheat flour is taken out from a container equipped with a sieve while sieving for use. Patent Literatures 3 and 4 disclose that wheat flour is filled in a shaker container. Patent Literatures 5 and 6 disclose that a blending ratio of seasoning is adjusted to prevent consolidation and the seasoning is put in a container for use. However, these Patent Literatures do not mention about an improvement in handleability of mixed powder that includes wheat flour and other cereal flour or starch.

### Citation List

### Patent Literature

Patent Literature 1: JP 09-266862 A
Patent Literature 2: JP 04-48179 Y
Patent Literature 3: WO 2015/119294 A
Patent Literature 4: WO 2015/119295 A
Patent Literature 5: JP 2005-270058 A
Patent Literature 6: JP 05-84048 A

### Summary of Invention

### Technical Problem

The inventors have studied and found that even when a conventional mix for fried food is packaged in a container, it is difficult to shake out an appropriate amount of the powder from the container. Although it is not considered as a problem in a bagged mixed powder so far, even when wheat flour and other powder are mixed to make a conventional mix for fried food and filled in a shaker container, the container is vibrated during transportation or storage, resulting in that the wheat flour and the other powder inside the container are separated from each other to become uneven. Furthermore, the wheat flour and the other powder are further separated in the container by vibration due to shaking operations. Accordingly, it turns out that the conventional mix packaged in a container eventually becomes unsuitable for use as a mix. Since a various kinds of powder having different properties are mixed in a mix for fried food obtained by mixing wheat flour and other powder, it is important in a packaged mix for fried food that each powder having different properties is always shaken out from a container at a constant proportion. Using an uneven mixed powder for cooking may impair the taste and quality of prepared food.

The inventors have intensively studied to solve the problem that is to provide a packaged mix for fried food which can be shaken out from a container in use at an appropriate amount, is hardly separated into wheat flour and other powder inside the container and can be shaken out of the container while maintaining a certain blend ratio of each component.

### Solution to Problem

As a result, the inventors have found that when a mix for fried food including wheat flour and other powder at a specific ratio and having a specific angle of repose is filled in a shaker container provided with a shaker hole(s) having a specific size, an appropriate amount of the mix for fried food is shaken out of the container, and the wheat flour and the other powder are not separated inside the container, which makes it possible to shake out the mix having the same quality at all times.

In other words, the present invention provides:
a packaged mix for fried food which is tempura flour or fritter mix filled in a container,
wherein the mix for fried food is a powder mixture comprising wheat flour and at least one selected from the group consisting of other cereal flour and starch at a mass ratio of 90:10 to 50:50, and the mix for fried food has an angle of repose of 42 to 53 degrees, and
the container is a shaker container including one or more shaker holes having a maximum width of 2 to 20 mm.

The present invention also provides:
a method for applying a mix for fried food which is tempura flour or fritter mix, the method comprising:
shaking out a mix for fried food filled in a container from the container to apply the mix for fried food to an object,
wherein the mix for fried food is a powder mixture comprising wheat flour and at least one selected from the group consisting of other cereal flour and starch at a mass ratio of 90:10 to 50:50, and
the mix for fried food has an angle of repose of 42 to 53 degrees, and
the container is a shaker container including one or more shaker holes having a maximum width of 2 to 20 mm.

The present invention also provides:
a method for producing a packaged mix for fried food which is tempura flour or fritter mix, the method comprising:
   mixing wheat flour with at least one selected from other cereal flour and starch at a mass ratio of 90:10 to 50:50 so as to obtain a powder mixture;
   adjusting an angle of repose of the powder mixture to 42 to 53 degrees; and
   filling the powder mixture in a container,
   wherein the container is a shaker container including one or more shaker holes having a maximum width of 2 to 20 mm.

### Advantageous Effects of Invention

The packaged mix for fried food of the present invention makes it possible to shake out a necessary amount of the mix for fried food from a container to sprinkle the mix for fried food evenly on a target portion of an object such as ingredients. Furthermore, the packaged mix for fried food of the present invention is hardly consolidated or aggregated in the container and hardly clogs up a shaker hole so that a certain amount of the mix can be shaken out by a simple operation without shaking the container repeatedly times or strongly. Still further, the packaged mix for fried food of the present invention is not separated into wheat flour and other powder in the container so that it is possible to provide a mix in which wheat flour and other powder are mixed at an appropriate proportion. The packaged mix for fried food of the present invention makes cooking of fried food easier and more economical.

### Description of Embodiments

The packaged mix for fried food of the present invention is filled in a shaker container provided with one or more shaker holes having a specific size. The packaged mix for fried food is used for taking out a required amount, or for applying to (for example, sprinkling onto or dredging over) to an object in a small amount by shaking out the mix through a shaker holes of the container. In the present invention, the term "shake out" is not limited to an action of giving vibration to the container with an opening of the container facing downward, but the term may also include an o of directing the opening of the container downward, an action of tilting the container, and an action of giving vibration by inverting the container or by tilting the container. Examples of the object to which the packaged mix for fried food of the present invention is applied include ingredients and food before or during cooking, and cooking utensils such as pan, baking sheets, chopping board, and plates, but are not limited thereto.

Preferably, the packaged mix for fried food of the present invention is used as a coating material for fried food such as karaage obtained by directly sprinkling and adhering a coating material to the surface of an ingredient and then cooking the coated ingredient in oil, or for fried food such as *tempura* or fritter obtained by adhering batter to an ingredient and then cooking the battered ingredient in oil. In the former case, fried food is made by sprinkling the packaged mix for fried food of the present invention on ingredients, rubbing the ingredient as necessary to absorb the flavor, and then cooking the ingredient in oil. In the latter case, fried food is made by shaking out the packaged mix for fried food of the present invention into a bowl or the like, and then adding water thereto to prepare batter, dipping the ingredient with the batter and cooking the ingredient in oil. Preferably, the packaged mix for fried food of the present invention can be used as flour to be adhered to the surface of an ingredient as a pretreatment for adhering batter or a coating material when producing fried food. Furthermore, the packaged mix for fried food of the present invention may be used as a coating mix for non-fried food. In this case, after directly adhering the mix to an ingredient or adhering batter including the mix to the ingredient in the above procedure, the ingredient may be cooked by a method other than frying, for example, shallow-frying with a small amount of oil and oven-baking.

The packaged mix for fried food of the present invention is a mix for fried food filled in a container. The mix for fried food in this description represents a powder mixture including wheat flour and at least one selected from the group consisting of cereal flour other than wheat flour and starch (hereinafter also referred to as "other cereal flour and the like").

Wheat to be used as a raw material of the wheat flour included in the mix for fried food may be of any types such as hard wheat, soft wheat, medium-hard wheat, hexaploid wheat, and durum wheat, and may be any one belonging to those types. Examples of the wheat used herein include hard wheat such as Canadian Western Red Spring wheat (CW), American Dark Northern Spring wheat (DNS) and Hard Red Winter wheat (HRW), and Australian Prime Hard wheat (PH); Japanese haxaploid wheat; medium-hard wheat such as Australian Standard White wheat (ASW); soft wheat such as American Western White wheat (WW); and durum wheat, but the wheat used herein is not limited thereto. Any kind or type of the aforementioned wheat may be used singly. Alternatively, two or more different kinds or types of wheat may be used in combination. The wheat flour included in the mix for fried food may be wheat flour obtained by milling the aforementioned wheat. Examples of the wheat flour included in the mix for fried food include hard wheat flour, semi-hard wheat flour, moderate wheat flour, soft wheat flour, durum wheat flour, and mixtures thereof, and a preferable example is soft wheat flour. The aforementioned wheat flour may include semolina flour.

The wheat flour included in the mix for fried food may be granulated wheat flour obtained by granulating the aforementioned wheat flour, or non-granulated wheat flour which has not granulated after milling, or a mixture thereof. Alternatively, the wheat flour included in the mix for fried food may be classified wheat flour obtained by classifying the granulated wheat flour and/or non-granulated wheat flour, unclassified wheat flour, or a mixture thereof. It is preferable that the wheat flour included in the mix for fried food is semolina flour or granulated wheat flour, since consolidation or aggregation of the mix for fried food can be reduced. In the following description, the term "wheat flour" includes non-granulated and granulated wheat flour as well as unclassified and classified wheat flour, unless otherwise distinguished.

Examples of the cereal flour other than wheat flour which may be included in the mix for fried food include barley flour, rye flour, rice flour, corn flour, sorghum flour, and bean flour. Examples of the starch which may be included in the mix for fried food include starch such as tapioca starch, potato starch, corn starch, waxy corn starch, and wheat starch, and modified starch of the aforementioned starch such as pregelatinized starch, etherified starch, esterified starch, acetylated starch, and crosslinked starch. The mix for fried food used in the present invention may include one of the aforementioned other cereal flour and the starch singly or may include two or more kinds.

The wheat flour and the other cereal flour and the like used in the present invention preferably have a specific particle size distribution from the viewpoint of providing the after-mentioned desired properties of the mix for fried food of the present invention. The wheat flour and the other cereal flour and the like have preferably a particle diameter of 10% particles (D10) being 18 µm or more, and the particle diameter of 90% particles (D90) being 500 µm or less; more preferably, D10 being 25 µm or more, D90 being 400 µm or less, and a mean volume diameter (MV) being 40 to 200 µm.

In this description, the diameter of 10% particles or D10 refers to a value calculated by laser diffraction-scattering method and corresponding to cumulative 10% particles that pass through a sieve. Similarly, the diameter of 90% particles or D90 refers to a value calculated by laser diffraction-scattering method and corresponding to cumulative 90% particles that pass through a sieve. Furthermore, the mean volume diameter (MV) is a value calculated by the laser diffraction-scattering method.

In the mix for fried food of the present invention, a mass ratio between the wheat flour and the other cereal flour and the like (the total amount of at least one selected from the group consisting of cereal flour other than the wheat flour and starch mentioned above) is from 90 : 10 to 50 : 50. When the mass ratio of the wheat flour is more than 99 : 1, the texture of the resulting fried food becomes hard. Conversely, when the mass ratio of the wheat flour is less than 20 : 80, the appearance of the resulting fried food becomes poor. When using the mix for fried food of the present invention as *tempura* flour or fritter mix, the color of a coating material is preferably light. For this reason, the mass ratio between the wheat flour and the other cereal flour and the like is within a range of 90 : 10 to 50 : 50.

In the present invention, the mix for fried food may further include raw materials other than the wheat flour and the other cereal flour and the like, depending on intended use or purpose. Examples of other raw materials include proteins; sugars such as dextrin; seasonings such as salt; thickeners; emulsifiers; baking powder; activated gluten; and enzymes. An amount of the other powder contained in the mix for fried food is preferably less than 20 mass%, more preferably less than 15 mass%. In other words, the total amount of the wheat flour and the other cereal flour and the like contained in the mix for fried food is preferably more than 80%, more preferably more than 85%.

The mix for fried food, as the entire mix, has an angle of repose of 42 to 53 degrees. If the mix for fried food has an angle of repose less than 33 degrees, the handleability of the packaged mix for fried food is deteriorated, for example, a large amount of the mix for fried food may be shaken out from the container by a single shaking-operation, or the wheat flour and the other powder may be easily separated from each other in the container. Conversely, if the mix for fried food has an angle of repose more than 54 degrees, an amount of the mix shaken out from the container may be too small, or the mix for fried food is easily consolidated or aggregated in the container. Therefore, in this case, the handleability of the packaged mix for fried food is also deteriorated. In this description, the angle of repose of powder is a value preferably measured with Powder Tester PT-X (available from Hosokawa Micron Corporation) in accordance with the following procedure:
(Method for measuring angle of repose) Using a funnel having an opening diameter of 5 mm, 100 g of sample powder is deposited on a circular table having a diameter of 8 cm from a height of 7.5 cm. At this time, the powder is deposited so that deposited powder overflows from the edge of the table. An angle formed between a conical ridgeline of the deposited powder on the table and the surface of the circular table is measured by laser light, and the measured value is taken as the angle of repose of the powder. For reference, the angle of repose of generally used wheat flour, for both soft wheat flour and hard wheat flour, measured in accordance with the above procedure is about 55 to 56 degrees.

The mix for fried food, as the entire mix, preferably has a mean volume diameter (MV) of 40 µm to 200 µm, more preferably 55 µm to 160 µm, still more preferably 65 µm to 130 µm. If the mix for fried food has a mean volume diameter (MV) less than 40 µm, the handleability of the packaged mix for fried food is deteriorated, for example, an amount of the mix shaken out from the container may be too small, or the mix for fried food may be easily consolidated or aggregated in the container. Conversely, if the mix for fried food has a mean volume diameter (MV) more than 200 um, a large amount of the mix for fried food may be shaken out from the container by a single shaking-operation, or the wheat flour and the other powder may be easily separated from each other in the container. Therefore, in this case, the handleability of the packaged mix for fried food is also deteriorated. Herein, the mean volume diameter (MV) is a value calculated by the laser diffraction-scattering method and measured with a generally used measurement apparatus such as Microtrac MT 3000 II (Nikkiso Co., Ltd.).

Examples of a method for adjusting the angle of repose and the mean volume diameter (MV) of the mix for fried food within the aforementioned ranges include a method for adjusting the surface properties and compositions of powder components contained therein so that the angle of repose and the mean volume diameter (MV) of the entire mix for fried food fall within desired ranges. For example, any one or all of the wheat flour and the other cereal flour and the like, raw materials of the mix for fried food, are granulated or classified to adjust the angle of repose or mean volume diameter (MV) within the aforementioned ranges, and then, if required, other raw materials are added thereto to prepare a base powder mixture, and subsequetnly, if required, the after-mentioned fluidizer such as sucrose fatty acid ester and silicon dioxide is added to this powder mixture to adjust the angle of repose of the powder mixture, whereby preparing the mix for fried food having the angle of repose within the aforementioned range. Usually, addition of the fluidizer such as sucrose fatty acid ester and silicon dioxide acts to lower the angle of repose of the mix for fried food.

Accordingly, the mix for fried food may further contain a fluidizer. Inclusion of the fluidizer makes it easier to adjust the angle of repose within the aforementioned range and to reduce separation between the wheat flour and the other powder in the mix for fried food. Examples of the fluidizer include at least one selected from the group consisting of sucrose fatty acid ester and silicon dioxide, and these substances may be used singly or in combination. Any type of sucrose fatty acid ester may be used as long as it is edible, but the sucrose fatty acid ester has HLB of 11 or less, for example, preferably HLB of 3 to 11, more preferably HLB of 3 to 8. Any type of silicon dioxide may be used as long as it is edible. An amount of the fluidizer contained in the mix for fried food is preferably 0.02 to 3 mass%, more preferably 0.05 to 2 mass%. An amount of the fluidizer more than 3 mass% may produce a bitter taste in the mix for fried food.

From the viewpoint of adjusting the angle of repose and the mean volume diameter (MV) of the mix for fried food, it is preferable that the wheat flour included in the mix for fried food contains granulated wheat flour or classified wheat flour. For example, the wheat flour included in the mix for fried food is granulated wheat flour, a mixture of granulated wheat flour and non-granulated wheat flour, classified wheat flour, or a mixture of classified wheat flour and unclassified wheat flour. Preferably, the mix for fried food includes granulated wheat flour or classified wheat flour in an amount of 80 mass% or more, more preferably 90 mass% or more, still more preferably 95 mass% or more, still more preferably 100 mass%, and the rest is wheat flour other than granulated wheat flour and classified wheat flour. Preferably, the entire wheat flour included in the mix for fried food has an angle of repose of 33 to 54 degrees, more preferably 38 to 53 degrees, still more preferably 42 to 52 degrees.

The granulated wheat flour used in the present invention may be produced from wheat flour which is to be a raw material of the mix for fried food by a known manner. In addition to the wheat flour raw material, the granulated wheat flour may include another powder raw material such as cereal flour other than wheat flour, starch, sugar such as dextrin, baking powder, and coloring powder. However, it is preferable that an amount of the other powder raw material in the granulated wheat flour is small so that the granulated wheat flour maintains inherent properties of wheat flour and can be easily applied to the use similar to conventional wheat flour. Therefore, the amount of the other powder raw material in the granulated wheat flour (dry-matter content) is preferably less than 40 mass%, more preferably less than 30 mass%, of the entire raw material powder including the wheat flour raw material and the other powder raw material. In other words, the amount of the wheat flour raw material in the granulated wheat flour (dry-matter content) is preferably more than 60 mass%, more preferably more than 70 mass%. When cereal flour other than wheat flour and starch are used as a raw material in the granulated wheat flour, the total amount of cereal flour other than wheat flour and starch used for the granulated wheat flour and cereal flour other than wheat flour and starch blended in the mix for fried food is used as an amount of the other cereal flour and the like in calculation of the mass ratio between the wheat flour and the other cereal flour and the like in the mix for fried food.

The granulated wheat flour may be produced by a method for adding water to and mixed with the raw material powder including the wheat flour raw material and then drying; or a method for mixing water including all or part of the other powder raw material as a binder with the remaining wheat flour raw material and then drying; or a method for compressing the raw material powder including the wheat flour raw material and crushing. A method for preparing granulated wheat flour is not particularly limited, and examples of the method include tumbling granulation, fluidized-bed granulation, stirring granulation, and spray drying granulation. Examples of a granulation process include, but are not limited to, a process of stirring the raw material powder with a vertical mixer while gradually adding thereto water to granulate; and a process of stirring and transferring the raw material powder with a feeder-type horizontal mixer while adding thereto water with a spraying device or the like during transferring, to granulate while mixing and transferring at the same time. For convenience sake, stirring granulation is preferable. Each of those granulation methods may be carried out with a commercially available granulation apparatus. After granulation, the granulated wheat flour may be sized or dried, as needed.

Preferable examples of the granulated wheat flour used in the present invention include those recited in JP 2015-200207 A, JP 2015-200208 A, or Patent Literature 3.

In the present invention, the mix for fried food is provided as being filled in a shaker container including one or more shaker holes. The shaker container may have any size and shape as long as it can be held with one hand for an operation of shaking out the mix for fried food in the container. For example, it is preferable to use a container having a size and a shape like a typical seasoning container or a spice container. More specifically, the shaker container is preferably a freestanding container having a cylindrical shape, an elliptic cylindrical shape, a prismatic shape, or a combination thereof with a diameter or a side length of 20 mm to 100 mm and a height of 80 mm to 200 mm and having a size capable of filling about 50 g to 500 g of the mix for fried food. A material of the container is not particularly limited as long as the container can store the mix for fried food and does not deform during shaking-operation. Examples of the material include plastic, metal, and paper.

The one or more shaker holes of the shaker container are not particularly limited in shape but may be circle, triangle, quadrangle, or polygon. The size of each shaker hole is preferably 2 to 20 mm, more preferably 3 mm to 12 mm, still more preferably 4 mm to 8 mm in maximum width. The number of the shaker holes is preferably 2 to 9, more preferably 4 to 7. If the size of each shaker hole is too small or the number of holes is small, the amount of the mix shaken out tends to be extremely small or the hole is easily clogged with the wheat flour. Conversely, if the size of each shaker hole is too large or the number of holes is large, a large amount of the mix for fried food may be shaken out by a single shaking-operation and excessive amount of the mix is sprinkled on an object, or an amount beyond necessity of the mix may be shaken out, which causes economic inefficiency. What is worse, the mix for fried food may soars or splashes and easily contaminates surroundings. The shaker container used in the present invention preferably includes 2 to 9 circular shaker holes having a diameter of 2 mm to 20 mm, more preferably 4 to 7 circular shaker holes having a diameter of 3 mm to 12 mm, still more preferably 4 to 7 circular shaker holes having a diameter of 4 mm to 8 mm. The shaker container used in the present invention includes preferably 2 to 9 shaker holes having a substantially quadrangular shape or a substantially polygonal shape with a diagonal length of 2 mm to 20 mm, more preferably 4 to 7 shaker holes having a substantially quadrangular shape or a substantially polygonal shape with a diagonal length of 3 mm to 12 mm, still more preferably 4 to 7 shaker holes having a substantially quadrangular shape or a substantially polygonal shape with a diagonal length of 4 mm to 8 mm.

In addition to the one or more shaker holes, the shaker container may be provided with a spooning opening. The spooning opening may be used as an opening when the mix for fried food in the container is taken out with a measuring spoon, teaspoon, or the like, or when a substantial amount of the mix for fried food is shaken out of the container. Preferably, in the shaker container, the spooning opening is disposed at a position apart from the one or more shaker holes. For example, the shaker holes may be disposed at one end on the top surface of the shaker container, and the spooning opening may be disposed on a part deviating 90 to 180-degree angle from the shaker holes.

The one or more shaker holes and the spooning opening of the shaker container are preferably openable and closable. Preferably, the shaker hole and the spooning opening are provided with an openable and closable lid. The lid is capable of preventing the mix for fried food filled in the shaker container from absorbing moisture and preventing foreign matters such as insects from entering the container. Although the lid is not particularly limited in type, it is preferable a lid which is easily openable or closable with one hand, for examples, a sliding lid or a flap lid. Furthermore, the lid of the shaker holes preferably is a lid capable of opening and closing a plurality of shaker holes at a time. The lid of the one or more shaker holes and the lid of the spooning opening may be a shared lid or an independent separate lid, but in either case, it is preferable to employ a structure in which the one or more shaker holes and the spooning opening do not open at the same time. For example, the lid of the one or more shaker holes and the lid of the spooning opening are two flap lids independently openable and closable. Alternatively, the lid of the one or more shaker holes and the lid of the spooning opening are a shared sliding lid that moves to close at least either one of the shaker holes and the spooning opening.

Preferably, when the packaged mix for fried food of the present invention is shaken out from the container, by a single shaking-operation of directing the opening of the container vertically downward, an amount of the mix for fried food appropriate for covering an ingredient such as meat and fish, for example, about 0.1 g to 3.4 g, preferably about 0.5 g to 2.6 g, more preferably about 0.8 g to 1.8 g, is shaken out from the container. To shake out more amounts of the mix for fried food from the container, the container may be shaken repeatedly or more strongly. Examples

In order to explain the present invention more specifically, Examples will hereinafter be described, but the present invention is not limited to only the following Example. In the following Example, an angle of repose of powder is a value measured with Powder Tester PT-X (available from Hosokawa Micron Corporation), and a mean particle diameter is a mean volume diameter (MV) of a particle diameter calculated with Microtrac MT 3000 II (Nikkiso Co., Ltd.) (MV) by the laser diffraction-scattering method.

### (Production Examples 1 to 12: Packaged Mix for Fried Food)

A commercially available wheat flour (soft wheat flour: "Flour" available from Nisshin Seifun Group Inc.; mean particle diameter of 54 µm; and angle of repose of 56.8 degrees) in an amount of 1 kg was placed in a container. While the wheat flour was stirred with a hand mixer, water was added thereto with a spray. The resulting mixture was dried in a thermostatic chamber so as to produce granulated wheat flour A having a mean particle diameter of about 143 µm and an angle of repose of 54.4 degrees. Similarly, granulated wheat flour B having a mean particle diameter of about 187 µm and an angle of repose of 52.0 degrees and granulated wheat flour C having a mean particle diameter of about 211 µm and an angle of repose of 51.3 degrees were produced. Each of the granulated wheat flour A, B, and C and each raw material listed in Table 1 were mixed to obtain a mix for fried food having an angle of repose shown in Table 1. Each of the mixes for fried food in amount of 100 g was filled in a cylindrical container having a diameter of 50 mm and a height of 120 mm, and then a circular plastic plate having a diameter of 50 mm and a thickness of 0.2 mm provided with five shaker having a diameter of 5 mm was fitted into the top surface of the container, whereby producing a mix for fried food packaged in a shaker container.

### (Evaluation of Packaged Mix for Fried Food)

Each packaged mix for fried food of Production Examples 1 to 12 was evaluated by the following Test Examples 1 to 3.

Test Example 1: Measurement of Shaken-out Amount
Each packaged mix for fried food in Production Examples 1 to 12 was shaken out on a flat plane placed horizontally. From a height of 10 cm right above a mark provided at the center of the plane, the opening of the container was is tilted vertically downward to the mark once. An amount of mix for fried food shaken out was measured and taken as a shaken-out amount. The shaken-out amount was evaluated by four rating in accordance with the following criteria A to D.
A: 0.8 g to 1.8 g
B: 0.5 g or more and less than 0.8 g or more than 1. 8 g and 2.6 g or less
C: 0.1 g or more and less than 0.5 g or more than 2.6 g and 3.4 g or less
D: Less than 0.1 g or more than 3.4 g

### Test Example 2: Separation Test of Powder

Each packaged mix for fried food of Production Examples 1 to 12 was horizontally fixed on a shaker and shaken at 80 rpm for two minutes. A distribution state of wheat flour and other powder in the container after shaking was evaluated by four rating in accordance with the following criteria A to D.
A: Wheat flour and other powder are mixed almost uniformly with almost no unevenness
B: Wheat flour and other powder are mixed with slight unevenness
C: Wheat flour and other powder are mixed with much unevenness
D: Wheat flour and other powder are separated from each other in layers, which is unsuitable for being shaken out

### Test Example 3: Quality Test of Fried Food

Using each packaged mix for fried food of Production Examples 1 to 12, fried chicken and prawn tempura were made by the following procedure.

### (Fried Chicken)

Chicken leg was cut into pieces of 20 g. Each packaged mix for fried food was shaken out to be adhered in amount of 10 g per 100 g of the meat. The mix-adhered chicken leg was cooked in salad oil heated to 170°C for four minutes to make fried chicken.

### (Prawn Tempura)

Each packaged mix for fried food in an amount of 100 g was weighed, put in a bowl and dissolved in 150 cc of cold water to prepare batter. Prawns with tail (20 g for each) were put therein and dipped with the batter, and then, cooked in salad oil heated to 170°C for two minutes so as to make prawn tempura.

Each fried food obtained herein was tasted by ten panelists. The panelists observed the appearance and texture of the food and evaluated the food by four rating in accordance with the following criteria A to D.
A: Good appearance and texture as fried food
B: Slightly dark or slightly light color, slightly hard or slightly soft texture
C: Dark or light color, hard or soft texture
D: Very dark or very light color, too hard or too soft texture, bad

The results of Test Examples 1 to 3 are shown in Table 1. In each of the mixes having both the angle of repose and the mass ratio of the wheat flour to the other cereal flour within predetermined ranges (Production Examples 3 to 11), the wheat flour and the other cereal flour were not separated in the container, and an appropriate amount of the mix was shaken out from the container, and what is more, fried food with good appearance and texture was provided. In each of the mixes having the smaller or larger angle of repose (Production Examples 1 and 12), it was difficult to shake out an appropriate amount of mix from the container. When the mass ratio of the wheat flour in the mix was small, the wheat flour and the other cereal flour were separated in the container, and it was not able to offer fried food with good appearance and texture.

**[Table 1]**

| Blend Ratio (mass%) | Production Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Wheat Flour A (Angle of Repose 54.4 degrees) | | 19 | | | | | | | 90 | | | 98 |
| Wheat Flour B (Angle of Repose 52.0 degrees) | 31 | | 35 | 47 | 50 | 70 | 80 | 90 | | | 98 | |
| Wheat Flour C (Angle of Repose 51.3 degrees) | | | | | | | | | | 98 | | |
| Rice Flour | 69 | 81 | 65 | 53 | 50 | 30 | 20 | 10 | 10 | 2 | 2 | 2 |
| Wheat Flour : Rice Flour | 31:69 | 19:81 | 35:65 | 47:53 | 50:50 | 70:30 | 80:20 | 90:10 | 90:10 | 98:2 | 98:2 | 98:2 |
| Total | 100 | 100 | 100 | 100 | 100 | 100 | 100 | 100 | 100 | 100 | 100 | 100 |
| Angle of Repose (degrees) | 32.5 | 33.0 | 33.3 | 38.1 | 42.2 | 47.8 | 50.3 | 51.5 | 53.8 | 51.0 | 51.9 | 54.2 |
| Mean Particle Diameter (µm) | 111 | 73 | 118 | 126 | 141 | 159 | 170 | 181 | 132 | 205 | 185 | 142 |
| Shaken-out Amount (g) | 3.5 D | 2.6 B | 2.3 B | 1.9 B | 1.6 A | 1.8 A | 1.6 A | 1.5 A | 0.9 A | 1.2 A | 1.3 A | 0.3 C |
| Separation Test | D | C | B | B | B | A | A | A | B | B | A | A |
| Quality of Fried Chicken | B | C | B | A | A | A | A | A | A | A | A | A |
| Quality of Prawn *Tempura* | C | D | B | B | B | A | A | A | A | B | B | B |

Examples 1-4 and 9-12 are not according to the invention.

### (Production Examples 13 to 19: Packaged Mix for Fried Food)

A mix for fried food was obtained in a manner similar to Production Examples 1 to 12 except that each raw material listed in Table 2 was mixed. As for the starch, potato starch having a mean particle diameter of about 50 µm was used. The mix obtained herein was evaluated in a manner similar to Test Examples 1 to 3. The results are shown in Table 2.

**[Table 2]**

| Blend Ratio (mass%) | Production Example | | | | | | |
|---|---|---|---|---|---|---|---|
| | 13 | 14 | 15 | 16 | 17 | is | 19 |
| wheat Flour A (Angle of Repose 54.4 degrees) | | | | 90 | 98 | 97.5 | 97.5 |
| wheat Flour B (Angle of Repose 52.0 degrees) | 20 | 30 | 50 | | | | |
| Potato Starch | 80 | 70 | 50 | 10 | 2 | 2 | 2 |
| Wheat Flour : Starch | 20:80 | 30:70 | 50:50 | 90:10 | 98:2 | 98:2 | 98:2 |
| Sucrose Fatty Acid Ester (HLB 5) | | | | | | 0.5 | |
| Fine Silicon Dioxide | | | | | | | 0.5 |
| Total | 100 | 100 | 100 | 100 | 100 | 100 | 100 |
| Angle of Repose (degrees) | 32.8 | 34.5 | 44.7 | 52.9 | 53.7 | 51.6 | 51.9 |
| Mean Particle Diameter (µm) | 89 | 102 | 136 | 131 | 140 | 140 | 140 |
| Shaken-out Amount (g) | 3.9 D | 2.3 B | 1.6 A | 1.0 A | 0.8 A | 1.2 A | 1.2 A |
| Separation Test | D | B | A | A | B | A | A |
| Quality of Fried Chicken | B | B | A | A | A | A | A |
| Quality of Prawn Tempura | C | B | A | A | B | B | B |

Examples 13, 14 and 17, 18, 19 are not according to the invention.

### Test Example 4: Study on Shaker Container

A mix for fried food contained in a shaker container was produced (Production Examples 20 to 32) in a manner similar to Production Example 5 except that the size of an shaker hole of the shaker container was changed as shown in Table 3. A shaken-out amount of each packaged mix for fried food was evaluated in a procedure similar to Test Example 1. The results are shown in Table 3. It should be note that the results of Production Example 5 are shown again in Table 3.

**[Table 3]**

| | Production Example | | | | | | | | | | | | | |
|---|---|---|---|---|---|---|---|---|---|---|---|---|---|---|
| | 20 | 21 | 22 | 23 | 24 | 25 | 26 | 27 | 28 | 29 | 5 | 30 | 31 | 32 |
| Angle of Repose (degrees) | 42.2 | 42.2 | 42.2 | 42.2 | 42.2 | 42.2 | 42.2 | 42.2 | 42.2 | 42.2 | 42.2 | 42.2 | 42.2 | 42.2 |
| Diameter of Shaker Hole (mm) | 1.5 | 2 | 3 | 4 | 12 | 20 | 22 | 5 | 5 | 5 | 5 | 5 | 5 | 5 |
| Number of Shaker Holes | 5 | 5 | 5 | 5 | 2 | 1 | 1 | 1 | 2 | 4 | 5 | 7 | 9 | 10 |
| Shaken-out Amount (g) | 0.2 C | 0.5 B | 0.8 B | 1.1 A | 1.8 A | 2.6 B | 3.5 D | 0.5 B | 0.7 B | 1.4 A | 1.6 A | 1.9 B | 2.5 B | 3.1 C |

Examples 20 and 26 are not according to the invention.

## Claims

1. A packaged mix for fried food which is *tempura* flour or fritter mix filled in a container,
wherein the mix for fried food is a powder mixture comprising wheat flour and at least one selected from the group consisting of other cereal flour and starch at a mass ratio of 90 :10 to 50 : 50, and
the mix for fried food has an angle of repose of 42 to 53 degrees, and
the container is a shaker container including one or more shaker holes having a maximum width of 2 to 20 mm.

2. The packaged mix for fried food according to claim 1, wherein the mix for fried food has a mean volume diameter of 40 µm to 200 µm.

3. The packaged mix for fried food according to claim 1 or 2, wherein the mix for fried food further comprises at least one selected from the group consisting of sucrose fatty acid ester and silicon dioxide.

4. A method for applying a mix for fried food which is *tempura* flour of fritter mix, the method comprising:
shaking out a mix for fried food filled in a container from the container to apply the mix for fried food to an object,
wherein the mix for fried food is a powder mixture comprising wheat flour and at least one selected from other cereal flour and starch at a mass ratio of 90 :10 to 50 : 50, and
the mix for fried food has an angle of repose of 42 to 53 degrees, and
the container is a shaker container including one or more shaker holes having a maximum width of 2 to 20 mm.

5. The method according to claim 4, wherein the mix for fried food has a mean volume diameter of 40 µm to 200 µm.

6. The method according to claim 4 or 5, wherein the mix for fried food further comprises at least one selected from the group consisting of sucrose fatty acid ester and silicon dioxide.

7. A method for producing a packaged mix for fried food which is *tempura* flour or fritter mix, the method comprising:
mixing wheat flour with at least one selected from other cereal flour and starch at a mass ratio of 90 :10 to 50 : 50 so as to obtain a powder mixture;
adjusting an angle of repose of the powder mixture to 42 to 53 degrees; and filling the powder mixture in a container,
wherein the container is a shaker container including one or more shaker holes having a maximum width of 2 to 20 mm.

## Patentansprüche

1. Verpackte Mischung für frittierte Nahrungsmittel, welche Tempura Mehl oder eine Krapfenmischung ist, die in einen Behälter gefüllt ist, wobei die Mischung für frittierte Nahrungsmittel eine Pulvermischung ist, die Weizenmehl und wenigstens eines, ausgewählt aus der Gruppe, bestehend aus einem anderen Getreidemehl und Stärke in einem Massenverhältnis von 90:10 bis 50:50, umfasst, und wobei die Mischung für frittierte Nahrungsmittel einen Schüttwinkel von 42 bis 53 Grad aufweist und der Behälter ein Streubehälter ist, der ein oder mehrere Streulöcher mit einer maximalen Weite von 2 bis 20 mm einschließt.

2. Verpackte Mischung für frittierte Nahrungsmittel nach Anspruch 1, wobei die Mischung für frittierte Nahrungsmittel einen mittleren Volumendurchmesser von 40 µm bis 200 µm aufweist.

3. Verpackte Mischung für frittierte Nahrungsmittel nach Anspruch 1 oder 2, wobei die Mischung für frittierte Nahrungsmittel ferner wenigstens eines, ausgewählt aus der Gruppe, bestehend aus Saccharosefettsäureester und Siliciumdioxid, umfasst.

4. Verfahren zum Aufbringen einer Mischung für frittierte Nahrungsmittel, welche Tempura Mehl oder eine Krapfenmischung ist, wobei das Verfahren Folgendes umfasst: Ausstreuen einer in einen Behälter gefüllten Mischung für frittierte Nahrungsmittel aus dem Behälter, um die Mischung für frittierte Nahrungsmittel auf einen Gegenstand aufzubringen, wobei die Mischung für frittierte Nahrungsmittel eine Pulvermischung ist, die Weizenmehl und wenigstens eines, ausgewählt aus einem anderen Getreidemehl und Stärke in einem Massenverhältnis von 90:10 bis 50:50, umfasst, und wobei die Mischung für frittierte Nahrungsmittel einen Schüttwinkel von 42 bis 53 Grad aufweist und der Behälter ein Streubehälter ist, der ein oder mehrere Streulöcher mit einer maximalen Weite von 2 bis 20 mm einschließt.

5. Verfahren nach Anspruch 4, wobei die Mischung für frittierte Nahrungsmittel einen mittleren Volumendurchmesser von 40 µm bis 200 µm aufweist.

6. Verfahren nach Anspruch 4 oder 5, wobei die Mischung für frittierte Nahrungsmittel ferner wenigstens eines, ausgewählt aus der Gruppe, bestehend aus Saccharosefettsäureester und Siliciumdioxid, umfasst.

7. Verfahren zur Herstellung einer verpackten Mischung für frittierte Nahrungsmittel, welche Tempura Mehl oder eine Krapfenmischung ist, wobei das Verfahren Folgendes umfasst: Mischen von Weizenmehl mit wenigstens einem, ausgewählt aus einem anderen Getreidemehl und Stärke in einem Massenverhältnis von 90:10 bis 50:50, um eine Pulvermischung zu erhalten; Einstellen des Schüttwinkels der Pulvermischung auf 42 bis 53 Grad; und Abfüllen der Pulvermischung in einen Behälter, wobei der Behälter ein Streubehälter ist, der ein oder mehrere Streulöcher mit einer maximalen Weite von 2 bis 20 mm einschließt.

## Revendications

1. Préparation emballée pour aliment frit qui est une farine à *tempura* ou préparation pour beignets versée dans un récipient,
dans laquelle la préparation pour aliment frit est un mélange en poudre comprenant de la farine de blé et au moins un ingrédient sélectionné parmi le groupe consistant en d'autres farines de céréales et fécules avec un rapport de masse de 90:10 à 50:50, et
la préparation pour aliment frit a un angle de talus de 42 à 53 degrés, et
le récipient est un récipient saupoudreur incluant un ou plusieurs trous de saupoudreur ayant une largeur maximum de 2 à 20 mm.

2. Préparation emballée pour aliment frit selon la revendication 1, dans laquelle la préparation pour aliment frit a un diamètre de volume moyen de 40 µm à 200 µm.

3. Préparation emballée pour aliment frit selon la revendication 1 ou 2, dans laquelle la préparation pour aliment frit comprend en outre au moins un ingrédient sélectionné parmi le groupe consistant en sucroester d'acide gras et dioxyde de silicium.

4. Procédé pour appliquer une préparation pour aliment frit qui est une farine à *tempura* ou préparation pour beignets, le procédé comprenant :
le saupoudrage avec une préparation pour aliment frit placée dans un récipient, à partir du récipient, pour appliquer la préparation pour aliment frit sur un objet,
dans lequel la préparation pour aliment frit est un mélange en poudre comprenant de la farine de blé et au moins un ingrédient sélectionné parmi le groupe consistant en d'autres farines de céréales et fécules avec un rapport de masse de 90:10 à 50:50, et
la préparation pour aliment frit a un angle de talus de 42 à 53 degrés, et
le récipient est un récipient saupoudreur incluant un ou plusieurs trous de saupoudreur ayant une largeur maximum de 2 à 20 mm.

5. Procédé selon la revendication 4, dans lequel la préparation pour aliment frit a un diamètre volumique moyen de 40 µm à 200 µm.

6. Procédé selon la revendication 4 ou 5, dans lequel la préparation pour aliment frit comprend en outre au moins un ingrédient sélectionné parmi le groupe consistant en sucroester d'acide gras et dioxyde de silicium.

7. Procédé pour produire une préparation emballée pour aliment frit qui est une farine à *tempura* ou préparation pour beignets, comprenant :
mélanger de la farine de blé avec au moins un ingrédient sélectionné parmi d'autres farines de céréales et fécules avec un rapport de masse de 90:10 à 50:50 de manière à obtenir un mélange en poudre ;
ajuster un angle de talus du mélange en poudre à 42 à 53 degrés ; et
verser le mélange en poudre dans un récipient
dans lequel le récipient est un récipient saupoudreur incluant un ou plusieurs trous de saupoudreur ayant une largeur maximum de 2 à 20 mm.
